# EUROPÄISCHE PATENTANMELDUNG

(11) **EP 0 702 888 A2**
(43) Veröffentlichungstag der Anmeldung: **27.03.1996**
(21) Anmeldenummer: 95111370.3
(22) Anmeldetag: 20.07.1995
(51) Int. Cl.: A01C 7/08

(54) **Schaltung an einer Sämaschine**

(30) Priorität: 22.09.1994 DE 9415336 U
(71) Anmelder: RABEWERK BERNBURG GmbH & Co., D-06406 Bernburg (DE)
(72) Erfinder: Richter, Gerhard, Dipl.-Ing., D-06429 Vienburg (DE); Dönicke, Gerhard, Dipl.-Ing., D-06406 Bernburg (DE)
(74) Vertreter: Missling, Arne, Dipl.-Ing.

(57) **Zusammenfassung**

Bei der Herstellung von Fahrgassen für eine nachfolgende Bearbeitung eines bestellten Feldes werden bestimmte Säschare abgeschaltet, indem die zugehörigen Dosierorgane stillgesetzt werden. Es ist erfindungsgemäß vorgesehen, diese Dosierorgane durch einzeln schaltbare Kupplungen an eine Säwelle zu an- bzw. von dieser abzukuppeln. Infolgedessen können die Fahrgassen am Führerstand des die Sämaschine ziehenden Schleppers frei ausgewählt und verändert werden.

## Beschreibung

Die Erfindung betrifft eine Schaltung an einer Sämaschine, insbesondere einer Drillmaschine, mit Säscharen oder dergleichen zur Einbringung des Saatgutes in den Boden, wobei potentielle Fahrgassen für die Laufräder einer Arbeitsmaschine oder eines Schleppers wahlweise nicht besät werden, und mit mehreren auf einer gemeinsamen Säwelle angeordneten Dosierorganen, welche die Beschickung der einzelnen Säschare mit Saatgut steuern.

Bei der Aussaat mit einer Sämaschine müssen in der Regel auch Fahrgassen von Saatgut freigehalten werden, über die später Arbeitsmaschinen bestimmter Spurweite für Pflegearbeiten geführt werden. Dabei kann diese Spurweite im wesentlichen in einem Bereich von 1,30m bis 1,80m liegen.

Im allgemeinen ergibt sich aus diesem Zusammenhang die Forderung, diejenigen Säschare, zu denen die Saatgutzufuhr gesperrt werden muß, möglichst frei wählen zu können. Das gleiche gilt für die Anzahl der abzuschaltenden benachbarten Säschare, die von vornherein nicht festgelegt werden kann, da sie abhängig ist von der Reifenbreite des oder der Nachfolgetraktors/-traktoren oder Selbstfahrgeräte. Jedoch reichen zumeist zwei stillgelegte Säschare aus, um eine genügend breite Fahrgasse zu erzeugen. Es bleibt aber trotzdem noch das Problem bestehen, daß der Abstand der Fahrgassen von der Schlepperachse, das heißt von der Mittenachse des bearbeiteten Feldstreifens, je nach Schlepper oder Arbeitsmaschine differiert.

Eine weitere Forderung ergibt sich daraus, daß die Arbeitsbreite der Sämaschine eine andere ist als die der Nachfolgegeräte, in der Regel ist die Sämaschinenarbeitsbreite erheblich geringer. Darum ist es wünschenswert, in periodischer Wiederkehr freigehaltene Fahrspuren bei den Sä-Überfahrten so anzulegen, daß sich in der Gesamtheit erforderliche Fahrgassen in Anzahl und Lage für die nachfolgende Bearbeitung ergeben.

Zu diesem Zweck sind bei einer Schaltung der eingangs erwähnten Art entsprechend der europäischen Patentanmeldung EP 0 176 023 A2 einzelnen Säscharen Dosierorgane zugeordnet, die unabhängig voneinander in periodischer Wiederkehr an die Säwelle kuppelbar sind, insbesondere in der Weise außermittig der Schlepperachse, daß sich auch zu einer ersten zur Schlepperachse mittigen Fahrgasse zu dieser versetzte Fahrgassen erzeugen lassen. Dabei ist die Anzahl und Lage der stillgelegten Säschare von vornherein festgelegt, weil die Dosierorgane mittels zu der Säwelle achsparallel versetzten Vorgelegewellen geschaltet werden. Auf den Vorgelegewellen befinden sich drehfest Antriebszahnräder für die betreffenden, auf der Säwelle frei drehbaren Dosierorgane der zu- und abschaltbaren Säschare. Die Vorgelegewellen sind durch mechanische, mittels Hubmagnet betätigter Kupplungen an die Säwelle kuppelbar. Sollen bei einer solchen Schaltung die stillzulegenden Säschare an eine andere Spurweiten eines Schleppers oder einer Arbeitsmaschine angepaßt werden, dann müssen die An triebszahnräder auf den Vorgelegewellen versetzt und ihr Anzahl gegebenenfalls verändert werden.

Für das Anlegen der Fahrgassen sind die zwei Schaltrhythmusgruppen "Symmetrische Spur" und "Versetzte Spur" wünschenswert. Bei der symmetrischen Spur werden beide Fahrgassenradspuren in einer Durchfahrt angelegt, bei der versetzten Spur wird eine erste Radspur bei der Hinfahrt und eine zweite Radspur erst bei der Rückfahrt angelegt.

Spurbreite der Fahrgasse, Fahrgassenbreite und Schaltrhythmus sind im allgemeinen in einem landwirtschaftlichen Betrieb gleichbleibend und damit fest eingestellt. Bei Maschinenringen und Lohnunternehmen besteht hingegen die Notwendigkeit, die vorgenannten Parameter variabel zu gestalten, um einen freizügigen Maschineneinsatz zu gewährleisten.

Die Erfindung hat sich deshalb die Aufgabe gestellt, eine Schaltung der eingangs näher bezeichneten Art so auszubilden, daß sie Fahrgassen für verschiedene Spurweiten anzulegen gestattet, ohne daß dazu die Sämaschine umgerüstet werden müßte. Der Schaltrhythmus bei der beispielsweise alternierenden Zu- und Abschaltung von Dosierorganen beim Anlegen von Fahrgassen soll darüber hinaus frei wählbar sein, wobei alle Schaltungen auch während der Fahrt von dem Schlepper aus ausführbar sein sollen.

Erfindungsgemäß wird die Aufgabe dadurch gelöst, daß einzelne Dosierorgane über elektrisch betätigbare Kupplungen, insbesondere Magnetkupplungen, frei zu- und abschaltbar sind. Auf die starre und unflexible Anordnung einer von einer Kupplung schaltbaren Vorgelegewelle braucht bei einer solchen Anordnung nicht zurückgegriffen zu werden, weil die für die Zu- und Abschaltung der jeweiligen Säschare zuständigen Dosierräder von den zugehörigen Kupplungen direkt an die Säwelle angekuppelt und von dieser wieder abgekuppelt werden können; dadurch, daß dieser Vorgang erfindungsgemäß für jedes Dosierorgan einzeln ausführbar ist, können beliebige Säschare stillgelegt oder aktiviert werden, ohne daß dazu die Sämaschine überhaupt angehalten werden müßte, insbesondere, wenn die Kupplungen elektrisch, beispielsweise elektromagnetisch, vom Führerstand des Schleppers aus betätigbar sind. Es ist auch ohne Schwierigkeiten möglich, die Stellorgane für die Kupplungen von einem zentralen Rechner aus in Betrieb zu setzen, der mit einem entsprechenden Steuerprogramm jede gewünschte Anordnung nicht besäter Fahrgassen zu erzeugen gestattet. Der relative geringe zusätzliche Aufwand für die Kupplungen wird sehr schnell wettgemacht, denn nun können mit ein und derselben Sämaschine alle erforderlichen Fahrgassen-Breiten, -Abstände und - Lagen, ohne Umbau und gegebenenfalls durch einfache Programmwahl an einem Steuerrechner ausgewählt werden.

Im Rahmen der Erfindung ist es dabei zunächst möglich, daß Dosierorgane, welche die für die Ausbildung von Fahrgassen verwendeten Säschare steuern, einzeln frei zu- und abschaltbar sind. Eine solche Anordnung erlaubt dem Schlepperführer die größte Freiheit bei der Programmierung der Säschare. In der Regel genügt es aber, wenn stattdessen Gruppen (Paare oder Mehrfachpaare) von Dosierorganen für symmetrisch beiderseits der Schlepperachse angeordnete Säschare einzeln zu- und abschaltbar sind, die zur Anlegung von Fahrgassen dienen. Bei der Anlegung von Fahrgassen für die Räder eine Arbeitsmaschine erfolgt die Schaltung der Dosierorgane gegebenenfalls dabei auch wechselweise, um durch Hin- und Rückfahrt auf dem bearbeiteten Feldstreifen die Fahrgassen zu erzeugen.

Es erweist sich als günstig, wenn einzelne oder mehrere Dosierorgane für auf einer Seite der Schlepperachse angeordnete Säschar zu- und abschaltbar sind. Insbesondere von Vorteil ist es, die vorgenannten Schaltungsarten wechselweise frei kombinierbar zu gestalten.

Es ist vorteilhaft und wirtschaftlich, wenn nur diejenigen Säschare abschaltbar sind, in deren Säbereich an Hand des zur Verfügung stehenden Maschinenparkes Fahrgassen vorgesehen werden sollen, und hingegen die Dosierorgane für die übrigen Säschare mit der Säwelle drehfest verbunden sind. Eine solche Anpassung kann beispielsweise für jeden Betrieb vorgenommen werden, für den auf diese Weise an der Schaltung die Anzahl der abschaltbaren Säschare und damit der kuppelbaren Dosierorgane optimierbar ist.

Vorzugsweise sind Dosierorgane für symmetrisch beiderseits der Schlepperachse angeordnete Säschare einzeln, insbesondere wechselweise, zu- und abschaltbar, die zur Anlegung von Fahrgassen für eine Arbeitsmaschine dienen, deren Arbeitsbreite verschieden von derjenigen der Sämaschine ist.

Eine bevorzugte Ausführung der Erfindung ist dadurch gekennzeichnet, daß symmetrisch beiderseits der Schlepperachse angeordnete Säschare jeweils auf einer Seite der Schlepperachse gruppenweise, insbesondere wechselweise, zu- und abschaltbar sind, die zur Anlegung von Fahrgassen für die Räder einer Arbeitsmaschine dienen. Genauso wie bei der paarweisen Schaltung der Säschare können hierbei sowohl der Abstand der Fahrgassen voneinander entsprechend der Spurweite als auch deren Breite entsprechend den jeweils vorgesehenen Laufrädern variiert werden. Die Bedienung eines Steuerrechners kann dabei soweit vereinfacht werden, daß zur Programmierung beispielsweise lediglich der Maschinentyp des Schleppers oder der Arbeitsmaschine eingegeben werden muß, so daß umständliche Überlegungen und Bedienungen auf dem Feld entfallen können.

Die Anzahl der Kupplungen kann vermindert werden, wenn Verbindungshülsen vorgesehen sind, die jeweils mindestens zwei benachbarte, zu- und abschaltbare Dosierorgane drehfest miteinander verbinden, wo dann jeweils nur eines der dermaßen verknüpften Dosierorgane mit der Säwelle kuppelbar ist.

Durch die Erfindung können nunmehr Fahrgassen für ganz beliebige Kombinationen von Schleppern und Arbeitsmaschinen angelegt werden, ohne daß dazu jeweils Umrüstarbeiten an der Sämaschine vorzunehmen wären. Die Schaltung kann auch ohne Schwierigkeiten an neue Spurweiten und/oder Arbeitsbreiten der Nachfolgegeräte angepaßt werden. Darüber hinaus ist es wie bei den aus dem Stand der Technik bekannten Einrichtungen gleichwohl nach wie vor möglich, kuppelbare Dosierorgane in drehfest mit der Säwelle verbundene umzuwandeln und umgekehrt, wenn sich die Spurweiten und/oder Arbeitsbreiten so stark verändern, daß sie die zunächst erfaßten Bereiche überschreiten. Die erfindungsgemäße Schaltung kann demzufolge in weitem Umfang den vorhandenen oder später erworbenen Schleppern und Arbeitsmaschinen angepaßt werden. Insbesondere ist es zudem möglich, ohne jegliche Umbaumaßnahmen frei zwischen den Schaltrhythmusgruppen "Symmetrische Spur" und "Versetzte Spur" zu wählen und umzuschalten, dieses kann sogar direkt während des Bertriebs der Sämaschine geschehen.

Die Erfindung wird nachstehend an Hand der Zeichnung an einem Ausführungsbeispiel näher erläutert. Es zeigen
- Fig.1: eine schleppergezogene Sämaschine mit einer Schaltung nach der Erfindung zur Herstellung einer Fahrgasse für ein Nachfolgegerät und
- Fig.2: eine abgewandelte Schaltung mit der Möglichkeit zum Schaltrhythmusgruppenwechsel,
beide in stark schematisierter Darstellung.

An einem Saatgutkasten Sk einer erfindungsgemäßen Sämaschine ist eine quer zu deren Arbeitsrichtung vorgesehene Säwelle Sw gelagert, die mit Dosierorganen D in Form von Dosierrädern D1 und D2 bestückt ist. Die Dosierräder D1 und D2 steuern während der Aussaat des Saatgutes die Beschickung von Säscharen Ss, über die das Saatgut in das Saatbett gelangt.

Die Dosierräder D1 wirken dabei auf Säschare Ss, die, außerhalb der vorgesehenen Fahrgassen, während der Aussaat stets Saatgut austragen; diese Dosierräder D1 sind deshalb drehfest mit der Säwelle Sw verbunden.

Eine zweite Gruppe von Dosierrädern D2 ist auf der Säwelle Sw frei drehbar gelagert und steuert die Saatgutzufuhr zu denjenigen Säscharen Ss, die zur Bildung von Fahrgassen geeignet sind und bei denen währenddessen die Einspeisung von Saatgut aus dem Saatgutkasten Sk verhindert werden muß. In einfacher Weise geschieht das dadurch, daß die Dosierräder D2 von der Säwelle Sw mittels (elektromagnetischer) Kupplungen Ku abgekoppelt werden.

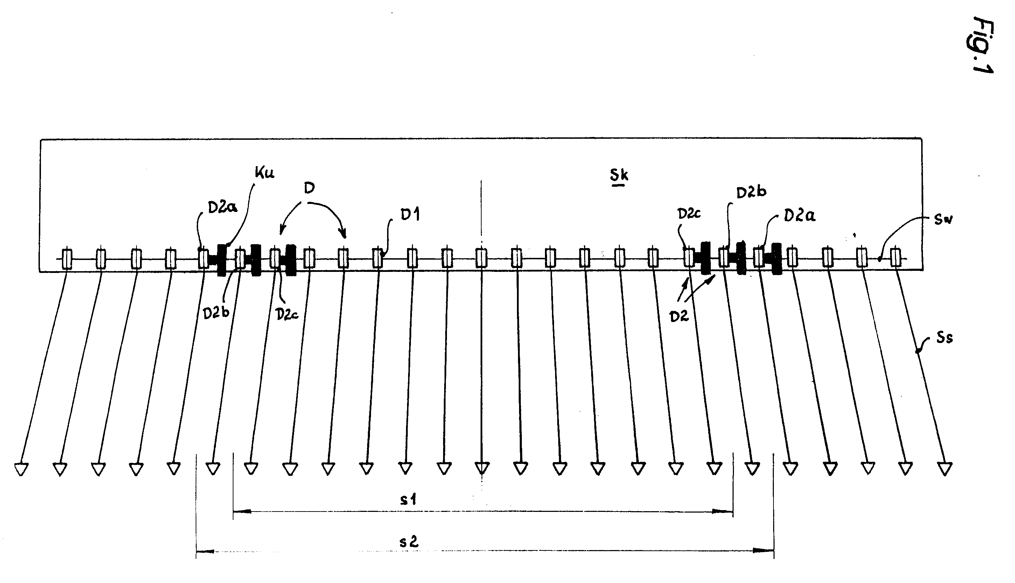

In der Fig.1 sind zwei Spurweiten s1 und s2 eingetragen, die ein Spurweiten-Intervall von ca. 1,50m bis 1,80m begrenzen, in dem die Laufräder der weitaus meisten Schlepper angesiedelt sind. Die Dosierräder D2a, D2b und D2c sind mittels der Kupplungen Ku paarweise mit der Säwelle Sw kuppelbar. Zur Herstellung einer Fahrgasse werden sie paarweise von der Säwelle Sw abgekuppelt; zumeist genügt es dabei, zwei Paare von Dosierrädern D2 stillzulegen und die Aussaat über das dritte Paar der Dosierräder D2 nicht zu unterbrechen. Auf diese einfache Weise kann die "Spurweite" der erzeugten Fahrgasse verändert werden, ohne daß die Sämaschine umgebaut werden müßte. Da die Kupplungen elektrisch betätigbar sind, kann die Betätigung während der Fahrt und vom Führerstand aus erfolgen. Durch Zu- und Abschalten einzelner Reihen wird die Anpassung an die unterschiedliche Nachfolgetechnik gelöst.

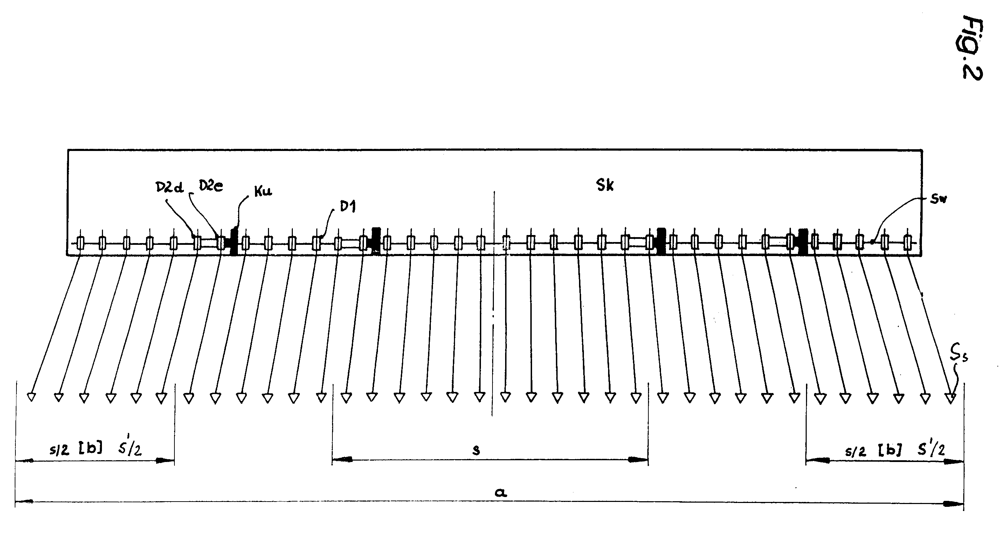

In der Fig.2 ist die Sämaschine zur Herstellung einer ersten Fahrgasse mit der Spurweite s und beiderseits je einer weiteren Fahrgasse mit der Spurweite s' eingerichtet. Die Fahrgassen mit der Spurweite s' entstehen dabei dadurch, daß im Hin- und Rücklauf der Sämaschine jeweils, von deren äußerer Arbeitsbreite a ausgehend, in halber Breite s/2 der "äußeren" Fahrgasse mit der Spurweite s' ein nicht besäter Ackerstreifen erzeugt wird. Zu diesem Zweck sind die Dosierräder D2d und D2e durch die zugehörigen Kupplungen Ku einzeln schaltbar, so daß jeweils nur eines der Dosierräder D2d und D2e stillgelegt ist. Dadurch ist insbesondere eine Möglichkeit geschaffen, Fahrgassen passend für unterschiedliche Verhältnisse der Arbeitsbreite(n) der Nachfolgegeräte zur Arbeitsbreite der Sämaschine anzulegen.

Selbstverständlich können die Spurweiten s der "inneren" Fahrgassen von denen s' der "äußeren" auch verschieden sein. Der Abstand b der schaltbaren Dosierräder D2d und D2e von den Grenzen der Arbeitsbreite a weicht dann von der halben Spurweite s/2 ab. In der Fig.2 ist diesem Umstand Rechnung getragen. Die Einrichtung ist deshalb geeignet, sowohl gleichzeitig mehrere gleiche Fahrgassen für einen Schlepper als auch unterschiedlich breite Fahrgassen, beispielsweise jeweils für einen Schlepper und eine Arbeitsmaschine anderer Spurweite zu erzeugen. Durch sinnvolle Anordnung der Magnete auf der Säwelle besteht die Möglichkeit, die Schaltrhythmusgruppen zu wechseln.

In der Fig.2 sind jeweils zwei schaltbare Dosierräder D2 miteinander durch Verbindungshülsen V drehfest verbunden; auf diese Weise genügt jeweils eine Kupplung Ku je saatgutfreier Ackerstreifen. Es ist darüber hinaus aber auch möglich, sowohl die "inneren" Fahrgassen nach dem Beispiel der Fig.1 für verschiedene, wahlbare Spurweiten s als auch in gleicher Weise die "äußeren" Fahrgassen für verschiedene, wählbare Spurweiten s' einzurichten. Auf diese Weise erlaubt die erfindungsgemäße Schaltung einen nahezu universellen Einsatz der Sämaschine.

Die Wahl der Schaltrhythmen erfolgt durch Programmierung auf einem Rechner, die Umschaltungen zwischen den Schaltrhythmusgruppen und den einzelnen Reihen durch einfache Umschalter. Letztgenannte Umschaltungen können wahlweise kombiniert werden.

### Aufstellung der Bezugszeichen

- a: Arbeitsbreite
- b: Abstand
- s,s': Spurweite
- s1,s2: Spurweite
- D: Dosierorgan
- D1,D2: Dosierrad
- D2a,D2b,:
- D2c,D2d,:
- D2e: Dosierrad
- Ku: Kupplung
- Sk: Saatgutkasten
- Ss: Säschar
- Sw: Säwelle
- V: Verbindungshülse

## Patentansprüche

1. Schaltung an einer Sämaschine, insbesondere einer Drillmaschine, mit Säscharen (Ss) zur Einbringung des Saatgutes in den Boden, wobei potentielle Fahrgassen für die Laufräder einer Arbeitsmaschine oder eines Schleppers wahlweise nicht besät werden, und mit mehreren auf einer gemeinsamen Säwelle (Sw) angeordneten Dosierorganen (D), welche die Beschickung der einzelnen Säschare (Ss) mit Saatgut steuern, dadurch gekennzeichnet, daß einzelne Dosierorgane (D) über elektrisch betätigbare Kupplungen (Ku), insbesondere Magnetkupplungen, frei zu- und abschaltbar sind.

2. Schaltung nach Anspruch 1, dadurch gekennzeichnet, daß die Dosierorgane (D2), welche die für die Ausbildung von Fahrgassen verwendeten Säschare (Ss) steuern, einzeln frei zu- und abschaltbar sind.

3. Schaltung nach Anspruch 1 oder 2, dadurch gekennzeichnet, daß Gruppen (Paare oder Mehrfachpaare) von Dosierorganen (D2a,D2b,D2c) für symmetrisch beiderseits der Schlepperachse angeordnete Säschare (Ss) einzeln zu- und abschaltbar sind.

4. Schaltung nach Anspruch 1 oder Anspruch 2, dadurch gekennzeichnet, daß einzelne oder mehrere Dosierorgane (D2a,D2b,D2c) für auf einer Seite der Schlepperachse angeordnete Säschare zu- und abschaltbar sind.

5. Schaltung nach Anspruch 3 und 4, dadurch gekennzeichnet, daß die Schaltungsarten nach Anspruch 3 und Anspruch 4 wechselweise fei kombinierbar sind.

6. Schaltung nach Anspruch 2 bis 5, dadurch gekennzeichnet, daß die Dosierorgane (D1) für die übrigen Säschare mit der Säwelle (Sw) drehfest verbunden sind.

7. Schaltung nach Anspruch 3 bis 6, dadurch gekennzeichnet, daß Dosierorgane (D2d,D2e) für symmetrisch beiderseits der Schlepperachse angeordnete Säschare (Ss) einzeln, insbesondere wechselweise, zu- und abschaltbar sind, die zur Anlegung von Fahrgassen für eine Arbeitsmaschine dienen, deren Arbeitsbreite (a) verschieden von derjenigen der Sämaschine ist.

8. Schaltung nach Anspruch 1 oder 2 und 7, dadurch gekennzeichnet, daß symmetrisch beiderseits der Schlepperachse angeordnete Säschare (Ss) jeweils auf einer Seite der Schlepperachse gruppenweise, insbesondere wechselweise, zu- und abschaltbar sind.

9. Schaltung nach einem der Ansprüche 1 bis 8, dadurch gekennzeichnet, daß Verbindungshülsen (V) vorgesehen sind, die jeweils mindestens zwei benachbarte, zu- und abschaltbare Dosierorgane (D2) drehfest miteinander verbinden.

10. Schaltung nach Anspruch 9, dadurch gekennzeichnet, daß jeweils eines der drehfest miteinander verbundenen Dosierorgane (D2) mit der Säwelle kuppelbar ist.
